Europäisches Patentamt

(19) European Patent Office

Office européen des brevets

(11) Veröffentlichungsnummer: **0 229 262**
**A2**

(12) **EUROPÄISCHE PATENTANMELDUNG**

(21) Anmeldenummer: 86115974.7

(22) Anmeldetag: 18.11.86

(51) Int. Cl.³: **E 03 C 1/18**

(30) Priorität: 18.12.85 DE 3544744
30.08.86 EP 86112027

(43) Veröffentlichungstag der Anmeldung:
22.07.87 Patentblatt 87/30

(84) Benannte Vertragsstaaten:
AT CH DE FR GB IT LI

(71) Anmelder: Schock & Co. GmbH
Gmünder Strasse 65
D-7060 Schorndorf(DE)

(72) Erfinder: Schock, Friedrich
Alte Steige 34
D-7060 Schorndorf(DE)

(72) Erfinder: Schock, Karl, Dipl.-Ing.
Aichenbachstrasse 136
D-7060 Schorndorf(DE)

(74) Vertreter: Patentanwälte Phys. Bartels Dipl.-Ing. Fink
Dr.-Ing. Held
Lange Strasse 51
D-7000 Stuttgart 1(DE)

(54) Spüle, insbesondere Küchenspüle, und Verfahren zum Herstellen eines Formteiles für diese Spüle.

(57) Spüle, insbesondere Küchenspüle, und Verfahren zum Herstellen eines Formteiles für diese Spüle.

Die Spüle weist ein Formteil 213 mit einer Arbeitsfläche auf, die durch einen Einsatz 219 gebildet ist, der aus einem Werkstoff besteht, dessen Härte von der Härte des Werkstoffes, aus dem das Formteil besteht, verschieden ist, so daß durch Verwendung eines härteren oder weicheren Werkstoffes für den Einsatz ein Zerkratzen der Arbeitsfläche vermieden wird bzw. die zerkratzte Arbeitsfläche durch Scheuern oder Polieren leicht glatt gemacht werden kann. Die verschiedenen Härten der Werkstoffe können durch verschieden harte Füllstoffe für ein- und dasselbe Kunstharz erreicht werden.

Zum Herstellen des Formteiles 213 kann der Einsatz 219 in eine Gießform für den Formteil so eingelegt, z.B. eingegossen werden, daß seine die Arbeitsfläche bildende Oberfläche an einem formbildenden Teil der Oberfläche der Patrizenhälfte der Gießform anliegt, und daß dann der flüssige Werkstoff für den Formteil in die Gießform gegossen wird, so daß nach dem Erhärten der Formteil 213 fugenlos am Einsatz 219 anliegt.

Fig.12

**Patentanwälte**

European Patent Attorneys

— 1 —

Phys. H.Ba 8229262
Dipl.-Ing. H.F
Dr.-Ing. M.He

Zugelassene Vertreter
beim Europäischen Patentamt

Patentanwälte · Lange Straße 51 · D-7000 Stuttgart 1

14.11.1986
7508khs
Reg.-Nr.126 945c

Firma SCHOCK & CO GMBH, Gmünder Str.65, 7060 Schorndorf

_____

Spüle, insbesondere Küchenspüle, und Verfahren zum Herstellen eines Formteiles für diese Spüle.

_____

Die Erfindung betrifft eine Spüle, insbesondere eine Küchenspüle, mit einem Formteil, das mindestens eine bei der Benutzung der Spüle beanspruchte Arbeitsfläche aufweist.

Eine Arbeitsfläche einer solchen Spüle ist vor allem der Boden eines in den Formteil der Spüle eingeformten Beckens, das dazu verwendet wird, um verschiedene Gegenstände, die auf dem Boden des Beckens aufliegen, zu spülen, wie das insbesondere bei Küchenspülen der Fall ist, wo verschiedenartigste Küchengeräte, z.B. Kochtöpfe, Pfannen und dergleichen, im Becken gespült werden.

An einer Spüle, insbesondere an Küchenspülen, kann auch eine Arbeitsfläche zum Schneiden und Hacken von Fleisch, Knochen, Gemüse od.dgl. vorgesehen sein.

- 2 -

Die bekannten Spülen dieser Art weisen einen einstückigen
Formteil auf, der z.B. aus Metall oder aus einem Kunststoffmaterial besteht. Dies Kunststoffmaterial ist in der Regel
ein Verbundstoff aus einem Kunstharz und im folgenden als
Quarzmehl bezeichnetem Silicatpulver. Verbundstoffe aus
Acrylharz sind im Handel z.B. unter den Marken "Silacron"
und "Asterite", aus Polyester unter der Marke "Dekostone"
und aus Polycarbonat unter der Marke "Resan" bekannt.

Der Erfindung liegt die Aufgabe zu Grunde, die bekannten
Spülen der oben genannten Art zu verbessern.

Diese Aufgabe ist gemäß der Erfindung dadurch gelöst, daß
die Arbeitsfläche die Oberfläche eines mit dem Formteil
verbundenen Einsatzes bildet, der aus einem Werkstoff besteht,
dessen Härte von der Härte des Werkstoffes, aus dem das
Formteil besteht, verschieden ist.

Dadurch wird ein vom Erfinder erkannter Nachteil der bekannten
Spülen beseitigt, der in folgendem besteht:
Beim Spülen von insbesondere unhandlichen oder schwereren
Gegenständen liegen diese auf dem Boden des Spülenbeckens
auf. Bestehen diese Gegenstände aus einem Material, das
härter ist als das Spülenmaterial, dann wird dadurch der
Boden des Spülenbeckens zerkratzt. Dies macht die Spüle
in kurzer Zeit sehr unansehnlich, was bei Küchenspülen
besonders nachteilig ist, da eine Hausfrau gerne Wert darauf
legt, daß das Spülenbecken im nichtbenutzten Zustand sauber
und ansehnlich aussieht.

Das gleiche gilt für andere Arbeitsflächen der Spüle, wo
z.B. bei Küchenspülen durch das Zerschneiden oder Zerhacken
von Fleisch, Knochen, Gemüse od.dgl., die Arbeitsfläche
zerkratzt oder anderweitig beschädigt wird.

Dieser Nachteil der bekannten Spülen kann erfindungsgemäß
entweder dadurch beseitigt werden, daß der Werkstoff des
Einsatzes härter ist als der des Formteiles, oder daß der
Werkstoff des Einsatzes weicher ist als der des Formteiles.

Durch Verwendung eines Werkstoffes für den Einsatz, der
härter ist als der Werkstoff des Formteiles, kann für den
Einsatz ein so harter Werkstoff verwendet werden, daß der
Boden eines Spülenbeckens nicht durch die in diesem gespülten
Gegenstände und eine andere Arbeitsfläche der Spüle nicht
durch z.B. Werkzeuge, wie Messer, Beile od.dgl, Kratzer
erhalten.
Als Werkstoff für den Einsatz kann hierbei ein Naturstein,
z.B. Granit, ein Kunststein, z.B. Sintergranit, ein keramischer Werkstoff, z.B. gebrannter Hartton, od.dgl. vorgesehen
sein.

Eine wirtschaftlich besonders vorteilhaft herstellbare
und in ihrer Erscheinungsform besonders ästhetische Ausführungsform ergibt sich durch die Kombination eines Formteils,
das aus dem oben erwähnten Verbundstoff aus Acrylharz und
Quarzmehl besteht, mit einem die Arbeitsfläche bildenden
Einsatz aus einem glasierten keramischen Werkstoff.

Wird jedoch für den Einsatz ein weicherer Werkstoff verwendet
als der des Formteiles, dann wird dadurch erreicht, daß
die von harten Gegenständen zerkratzte Arbeitsfläche mittels
Scheuer- und Poliermittel oder mittels Sandpapier wieder
glatt gemacht werden kann, so daß die Kratzer nicht mehr
sichtbar sind und die Oberfläche des Einsatzes ein seidenmatt
glänzendes Aussehen erhält.

- 4 -

Die verschiedene Härte der beiden Werkstoffe kann dadurch
erreicht werden, daß das Formteil aus einem Harz mit hartem
Füllstoff und der Einsatz aus dem gleichen Harz mit relativ
weicherem Füllstoff besteht. Dies hat den Vorteil, daß
beide Werkstoffe im wesentlichen den gleichen Wärmeausdehnungskoeffizienten besitzen, so daß der Einsatz fugenlos
in eine entsprechende Aussparung des Formteiles eingesetzt
werden kann oder noch besser, nach dem im folgenden beschriebenen erfindungsgemäßen Verfahren vom Werkstoff des Formteiles bis auf seine Sichtfläche umgossen werden kann.

Bei einer vorteilhaften Ausführungsform sind als Harz Acrylharz, als harter Füllstoff Quarzmehl und als relativ weicherer
Füllstoff Aluminium- oder Magnesiumhydroxid vorgesehen.

Es sind zwar Spülen bekannt, bei denen das Formteil samt
seinen Arbeitsflächen aus Acrylharz mit dem Füllstoff Aluminium- oder Magnesiumhydroxid besteht. Diese bekannten Spülen
haben jedoch den Nachteil, daß sie nicht in dunklen Farben
hergestellt werden können, weil bei dunklen Farben schon
leichte Kratzer des relativ weichen Materials sichtbar
sind. Dadurch erhalten dunkel gefärbte Spülen dieser Art
sehr schnell und insbesondere beim Nachbearbeiten eine
unansehnliche Oberfläche.

Auch kann man hell gefärbte Spülen dieser Art nicht mit
einer hochglänzenden Oberfläche versehen, weil auch auf
dieser jeder kleinste Kratzer sofort sichtbar ist und durch
Nachbearbeiten der ursprüngliche Hochglanz nicht erreichbar
ist. Aus diesem Grunde werden die bekannten Spülen aus
diesem verhältnismäßig weichen Werkstoff nur in hellen
Farben und mit matten Oberflächen hergestellt, um die genannten Nachteile zu vermeiden. Dies ist jedoch nicht jedermanns Geschmack.

Durch die Erfindung wird nun erreicht, daß die Spüle als
Ganzes aus einem verhältnismäßig harten Werkstoff besteht,
der in einer beliebigen Farbe, also auch hell oder dunkel,
eingefärbt werden kann und mit einer beliebig glänzenden,
z.B. auch hochglänzenden Oberfläche versehen werden kann,
ohne daß befürchtet werden muß, daß die nicht eine Arbeitsfläche bildende Oberfläche der Spüle durch Gebrauch unansehnlich wird. Die Arbeitsflächen dagegen können immer durch
die oben beschriebene, von jeder Hausfrau durchführbare
Bearbeitung mit einem seidenmatt glänzenden neuen Aussehen
versehen werden, was z.B. bei hochglänzenden Spülen noch
den Vorteil hat, daß die Arbeitsflächen von der übrigen
Oberfläche sich ästhetisch abheben.

Die Erfindung betrifft auch ein Verfahren zum Herstellen
des Formteiles für eine Spüle, bei der der Werkstoff des
Einsatzes im wesentlichen den gleichen Wärmeausdehnungskoeffizienten hat wie der Werkstoff des Formteiles.

Das erfinderische Verfahren besteht darin, daß der Einsatz
in eine Gießform für den Formteil so eingelegt wird, daß
seine die Arbeitsfläche bildende Oberfläche an einem formbildenden Teil der Oberfläche der Patrizenhälfte der Gießform
anliegt, und daß dann der flüssige Werkstoff für den Formteil
in die Gießform gegossen wird, so daß nach dem Erhärten
der Formteil fugenlos am Einsatz anliegt.

Die an der Oberfläche der Patrizenhälfte anliegende Oberfläche des Formteiles bildet die Arbeitsfläche des Formteiles.
Dadurch, daß der Einsatz an der Patrizenhälfte anliegt,
wenn der Formteil in der Gießform gegossen wird, wird der
Einsatz allseitig bis auf seine an der Patrizenhälfte anliegenden Sichtfläche in den Werkstoff des Formteiles fugenlos
eingebettet. Durch Verwendung des gleichen Kunstharzes
und verschieden harten Füllstoffen treten auch bei Temperaturänderungen des Formteiles keine Schwierigkeiten auf,
da die Wärmeausdehnungskoeffizienten des Formteiles und
des Einsatzes dann im wesentlichen gleich groß sind.

- 6 -

Die Erfindung und weitere für ihre Verwirklichung wichtige
Eigenschaften sind in der folgenden Beschreibung von in
der Zeichnung dargestellten Ausführungsbeispielen der Erfindung und von das erfinderische Verfahren erläuternden Skizzen
im einzelnen beschrieben.

Es zeigen in schematisch vereinfachter Weise:

Fig. 1    eine abgebrochen dargestellte, perspektivische
          Ansicht des Beckens eines Ausführungsbeispiels
          einer Küchenspüle;

Fig. 2    einen abgebrochen dargestellten Schnitt
          des Beckens nach Fig.2;

Fig. 3 bis 5   der Fig.2 entsprechend dargestellte
          Schnitte von drei weiteren verschiedenen
          Ausführungsformen;

Fig. 6    eine Draufsicht auf ein weiteres Ausführungsbeispiel eines Beckens einer Küchenspüle ;

Fig. 7    einen Schnitt nach der Linie VII - VII

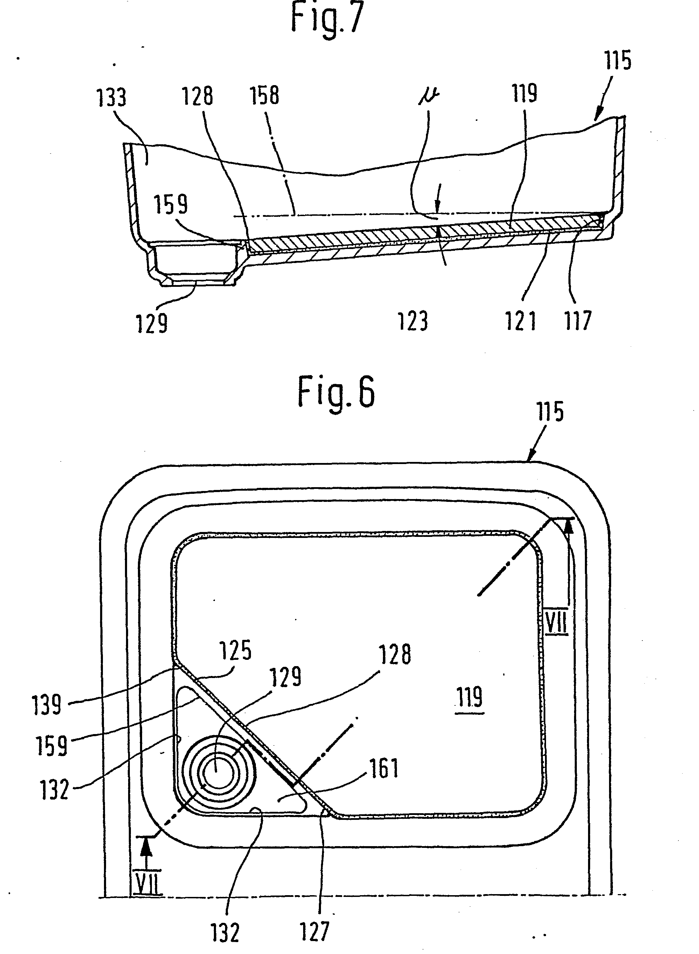

          in Fig.6;

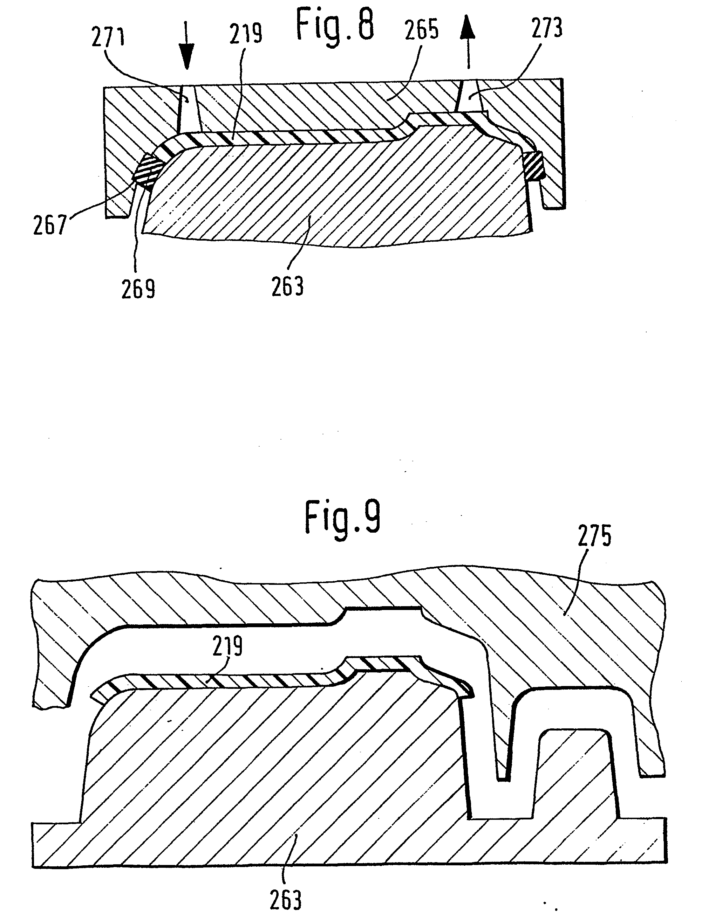

Fig. 8 und 9   Schnitte von Gießformen zum Herstellen
          des Einsatzes bzw. des Spülenformteiles
          nach einem ersten Ausführungsbeispiel des
          erfindungsgemäßen Verfahrens, wobei in
          Fig.9 von zwei Formhälften abgebrochen
          dargestellte Teile in voneinander abgehobener
          Stellung gezeigt sind, die zum Ausformen
          des Spülenbeckens dienen;

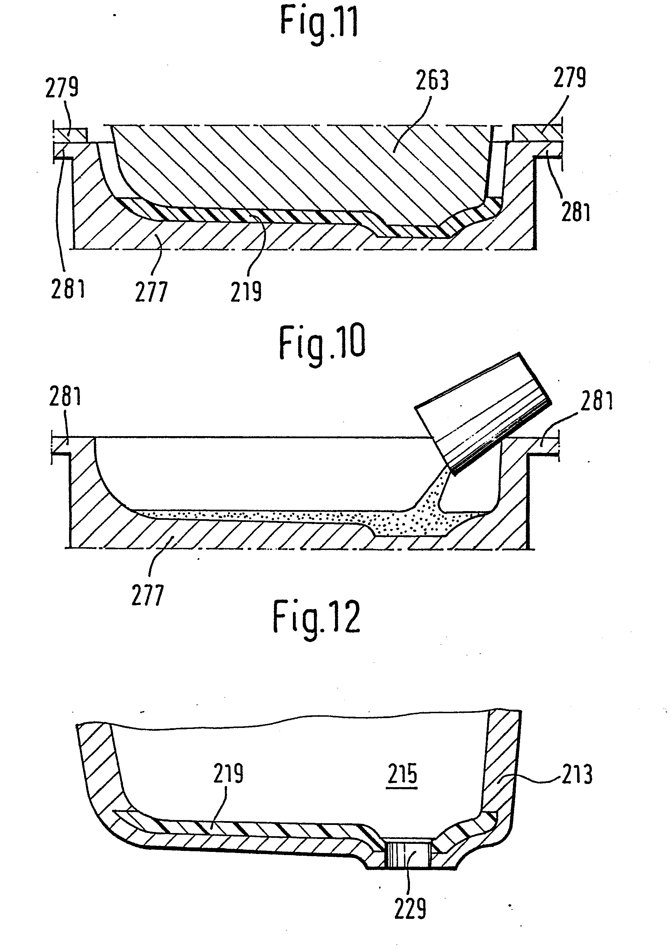

Fig. 10 und 11    Schnitte zum Darstellen eines zweiten
                  Ausführungsbeispieles des erfinderischen
                  Verfahrens;

Fig. 12           einen der Fig.7 entsprechenden Schnitt
                  eines nach dem erfinderischen Verfahren
                  hergstellten Beckenbodens.

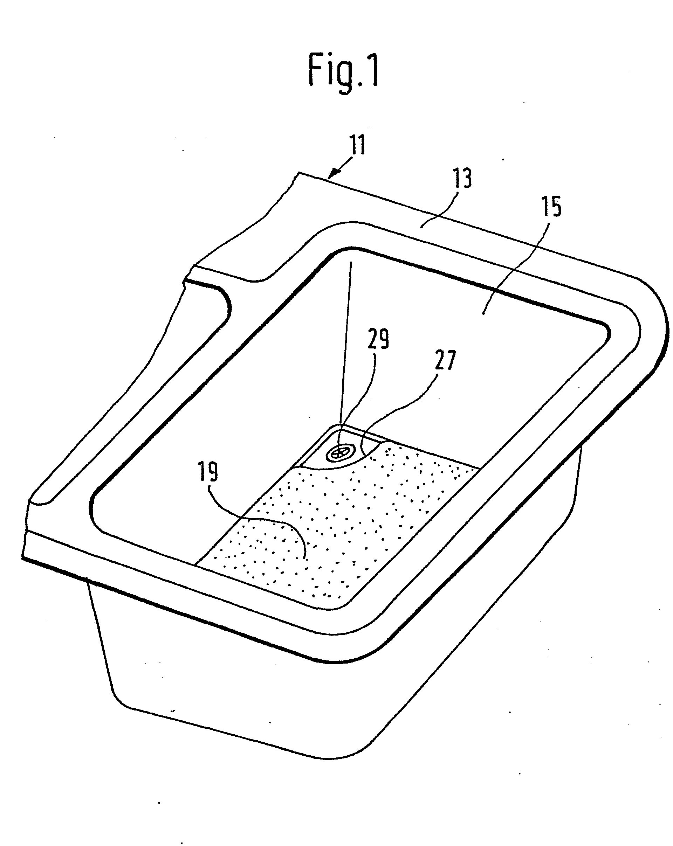

Die in Fig.1 als Ganzes mit 11 bezeichnete Küchenspüle
weist ein Formteil 13 auf, das aus einem Verbundstoff aus
einem Acrylharz mit dem Füllstoff Quarzmehl (Silicatpulver)
besteht. In dieses Formteil ist ein Becken 15 eingeformt,
in dessen Boden eine Vertiefung 17 für einen Einsatz 19
vorgesehen ist. Der Einsatz 19 bildet eine ebene, in der
Draufsicht im wesentlichen rechteckige, keramische Platte,
die aus hochdruckgepreßtem Hartton besteht und bei der
mindestens die den Beckenboden bildende Oberfläche glasiert
ist.

Um durch bei punktförmigen Belastungen dieses Einsatzes
durch Zugspannungen entstehende Risse zu vermeiden, ist
der Boden 21 der Vertiefung 17 eben ausgeführt und der
Einsatz 19 auf seiner dem Boden 21 zugekehrten Seite mit
einem mit Glasfasern armierten Harz beschichtet und unter
Bildung einer unteren und seitlichen Polyurethanschicht
23 bzw. 25 in der Vertiefung 17 eingebettet.

- 8 -

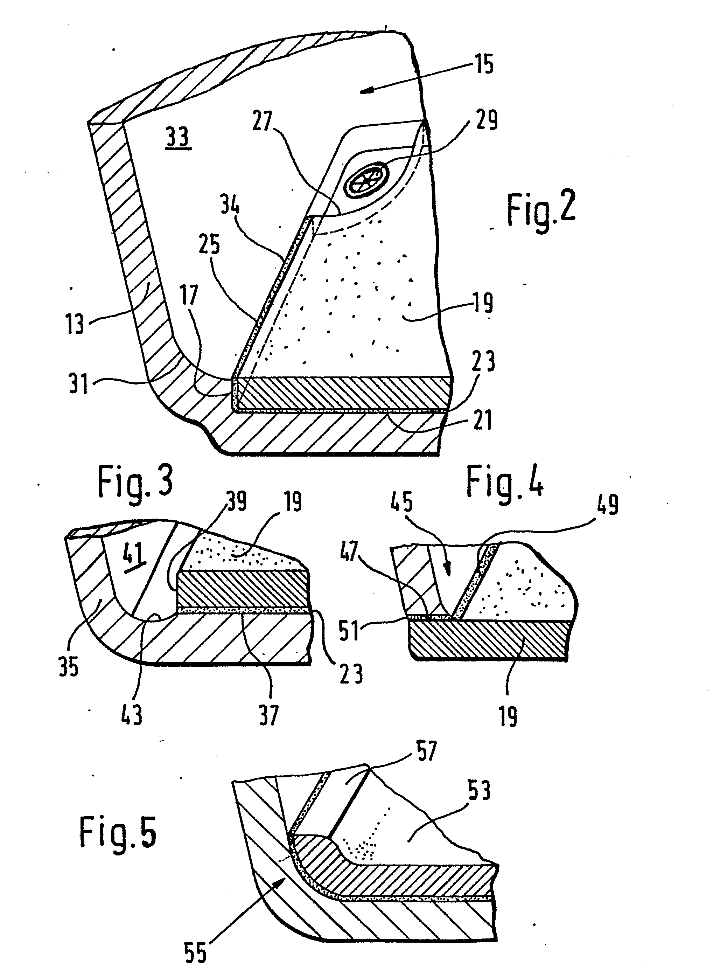

Die eine in Fig.2 sichtbare Ecke des plattenförmigen Einsatzes 19 weist eine durchgehende Aussparung 27 für einen im Boden 21 der Vertiefung 17 des Formteils 13 vorgesehenen Abfluß 29 auf. Bei einer waagerechten Anordnung der Küchenspüle 11 ist der Boden 21 der Vertiefung 17 in Richtung zu der Aussparung 27 leicht geneigt.

Wie das aus Fig.2 deutlich ersichtlich ist, ist der untere Teil 31 der inneren Seitenwandung 33 des Beckens 15, der von der äußeren Kante 34 der Vertiefung 17 begrenzt wird, so konkav gewölbt, daß die innere Seitenwandung 33 des Beckens 15 fluchtend in die ebene, obere Fläche des Einsatzes 19 übergeht.

Dadurch, daß bei der oben beschriebenen Ausführungsform einer Küchenspüle die Oberfläche des Bodens des Beckens 15 durch die Oberfläche des Einsatzes 19 gebildet ist, der als Oberfläche eines aus Hartton gebrannten, hochdruckgepreßten Einsatzes eine große Härte besitzt, wird auch bei einem langjährigen Gebrauch ein Zerkratzen des Beckenbodens vermieden.

Das in Fig.3 dargestellte Ausführungsbeispiel unterscheidet sich vom Ausführungsbeispiel nach den Fig.1 und 2 dadurch, daß hier im Boden des in den Formteil eingeformten Beckens 35 anstelle der Vertiefung 17 nach Fig.2 nur eine ebene Stützfläche 37 für den Einsatz 19 vorgesehen ist. Dadurch wird die beim Ausführungsbeispiel nach Fig.2 entstehende Fuge zwischen den Stirnwänden 39 des Einsatzes 19 und der Vertiefung 17 vermieden. Hierbei ist es zweckmäßig, zwischen den Stirnwänden 39 des Einsatzes 19 und der inneren Seitenwandung 41 des in den Formteil eingeformten Beckens 35 einen so großen Abstand vorzusehen, daß dabei eine leicht zu reinigende Rinne 43 entsteht.

Zweckmäßigerweise weist auch hierbei die Stützfläche 37 und damit die Rinne 43 eine Neigung zu dem in Fig.3 nicht dargestellten Abfluß auf, so daß auch das in der Rinne 43 befindliche Wasser abfließen kann. Auch bei diesem Ausführungsbeispiel ist der Einsatz 19 mit der Stützfläche 37 durch eine Polyurethanschicht 23 verbunden.

Das in Fig.4 dargestellte Ausführungsbeispiel unterscheidet sich von den vorhergehenden beiden Ausführungsbeispielen dadurch, daß hier das Formteilbecken 45 anstelle eines Bodens eine Öffnung 49 aufweist, die von einem ebenen unteren Rand 47 der Beckenseitenwände umrandet ist. An diesem unteren Rand 47 ist der Einsatz 19 von unten befestigt. Auch hier besteht der Einsatz 19, wie bei den Ausführungsbeispielen nach den Fig.1 bis 3, aus einer hochdruckgepreßten, ebenen Keramikplatte, die mittels einer Klebemasse 51 mit dem Rand 47 ver- bunden ist.

Diese Masse kann aus Acryl-, Epoxyd-, Alkyd-, Polyesterharz oder einem ähnlichen Stoff bestehen. Bei diesem Ausführungsbeispiel ist im Einsatz 19 eine vorzugsweise auch in einer Ecke angeordnete, in Fig.4 nicht dargestellte, durchgehende Aussparung vorgesehen, in der ein Abfluß unmittelbar im Einsatz 19 befestigt ist.

Das in Fig.5 dargestellte Ausführungsbeispiel unterscheidet sich von den drei Ausführungsbeispielen nach den Fig.1 bis 4 dadurch, daß hier der Einsatz 53 die Form einer flachen Schale hat. Dadurch besteht nicht nur der ebene Boden des Spülenbeckens 55, sondern auch die anschließenden unteren Ränder der Seitenwandung des Spülenbeckens 55 aus dem harten, keramischen Material des Einsatzes 53.

Der Einsatz 53 kann hierbei auch entsprechend der Fig.4 mit
einem Formteilbecken verbunden sein, das anstelle eines Bodens
eine vom unteren Rand 47 der Beckenseitenwände umrandete
Öffnung aufweist, wobei dann der obere Schalenrand 57 mit
dem unteren Rand 47 verbunden ist, wie das in Verbindung
mit Fig.4 beschrieben ist.

Bei den oben beschriebenen Ausführungsbeispielen ist die
durchgehende Aussparung 27 für den Abfluß an einer Ecke des
Einsatzes vorgesehen. Diese Aussparung kann jedoch an einer
beliebigen Stelle des Einsatzes vorgesehen sein.

Das Ausführungsbeispiel nach den Fig. 6 und 7 entspricht
im wesentlichen dem Ausführungsbeispiel nach den Fig.1 und 2.
Zur Vereinfachung der Beschreibung sind diejenigen Teile
des Ausführungsbeispiels nach den Fig.6 und 7, die den Teilen
des Ausführungsbeispiels nach Fig. 1 und 2 entsprechen, mit
um 100 größeren Bezugszahlen bezeichnet, so daß durch diesen
Hinweis auf die Beschreibung des Ausführungsbeispiels nach
den Fig.1 und 2 Bezug genommen wird.

Der Boden 121 der Vertiefung 117 für den Einsatz 119 ist
bei dem Ausführungsbeispiel nach den Fig. 6 und 7 in der
Gebrauchslage der Spüle gegenüber der Horizontalebene 158
um den Winkel µ zum Abfluß 129 hin nach unten geneigt. Der
Winkel µ beträgt bei dem Ausführungsbeispiel 4°.

Die Vertiefung 117 ist am unteren Ende des Bodens 121 durch
eine Rippe 159 begrenzt, die sich zwischen den unteren Rändern
132 der inneren Seitenwandungen 133 des Beckens 115 erstreckt.
Die Rippe 159 begrenzt zusammen mit den unteren Seitenrändern
132 eine in der Draufsicht dreieckige Mulde 161, die an ihrem
tiefsten Punkt eine Öffnung für den Abfluß 129 aufweist.

- 11 -

Die diesem Abfluß 129 abgekehrte Seitenwandung der Rippe
bildet eine Anlagefläche für eine Stirnwand 139 des Einsatzes
119, die längs einer Kante 128 verläuft, die mit den benachbarten Stirnwänden des in der Draufsicht im wesentlichen rechteckigen Einsatz 119 Winkel von 45° bildet. Um diese Kante
128 ist der Einsatz 119 durch die Neigung des Bodens 121
gegenüber der Horizontalebene 158 gekippt. Im übrigen ist
der als planparallele Platte ausgebildete Einsatz 119 in
der gleichen Weise wie beim Ausführungsbeispiel nach den
Fig.1 und 2 in der Vertiefung 117 durch Schichten 123 aus
Polyurethan und 125 aus Siliconkautschuck befestigt.

Durch die Schrägstellung des Einsatzes 119 wird ein einwandfreier Abfluß des Wassers von dem Einsatz sichergestellt.
Durch die Trennung der Vertiefung 117 für den Einsatz 119
von der Mulde 161 mit der Öffnung für den Abfluß 129 wird
eine einwandfreie, den Einsatz 119 allseitig umfassende
Lagerung desselben und ein problemloser Anschluß der Oberfläche des Einsatzes an den Abfluß 129 erreicht.

Bei den oben beschriebenen Ausführungsbeispielen besteht
der Einsatz aus einem keramischen Werkstoff, der vorzugsweise
aus Hartton gebrannt ist. Anstelle eines solchen Werkstoffes
kann Naturstein, z.B. Granit, aber auch ein Kunststein, z.B.
ein sogenannter Sintergranit, vorgesehen sein, der aus zerkleinertem und dann gesintertem Granit besteht. Unter keramischen Werkstoffen sind hier auch Glaskeramik und Hartglas
zu verstehen. Vorzugsweise soll natürlich die Härte größer
sein als die Härte des Werkstoffes, aus dem die in der Spüle
zu spülenden Gegenstände bestehen, z.B. härter als Stahl
und Gußeisen.

Soweit der für den Einsatz 19 oder 53 verwendete Werkstoff,
z.B. ein keramischer Werkstoff oder Sintergranit od.dgl.,

Poren aufweist, ist es zweckmäßig, ihn in glasierter Form
zu verwenden, da andernfalls bei einer Reibung zwischen dem
zu spülenden Gegenstand und dem Einsatz Partikel des zu
spülenden Gegenstandes sich in den Poren festsetzen und dadurch
Streifen bilden. Als Glasur eignet sich insbesondere eine
Korund-Glasur (Aluminiumoxid) wegen seiner Härte.

Im Vorstehenden ist als Arbeitsfläche einer Spüle lediglich
der Boden des in den Formteil eingeformten Beckens genannt.
Diese Arbeitsfläche kann aber auch z.B. auf der Oberfläche
des Formteiles zum Schneiden und Hacken von Fleisch, Gemüse
und Knochen im wesentlichen in der oben beschriebenen Art
und Weise ausgebildet sein. Diese Abwandlung der Arbeitsfläche
des Formteiles kann vom Fachmann auf Grund der obigen Beschreibung ohne weiteres verwirklicht werden, so daß sich eine
nähere Beschreibung hierfür erübrigt.

Die durch die oben beschriebenen Ausführungsbeispiele erzielte
Verbesserung der bekannten Spülen kann auch dadurch erreicht
werden, daß der Einsatz 19 oder 53 aus einem Werkstoff besteht,
der weicher ist als der Werkstoff des Formteiles 13. Dies
ergibt die Möglichkeit, den Formteil 13 so weich auszuführen,
daß die beim Arbeiten auf der Arbeitsfläche verursachten
Kratzer von der Hausfrau selbst durch Scheuern oder Polieren
oder mittels Sandpapier unsichtbar gemacht werden können.
Hierbei kann die Arbeitsfläche nach jeder Benutzung seidenmatt
glänzend gemacht werden. Verwendet man hierbei für den Formteil
und für den Einsatz das gleiche Harz, wobei zur Erzielung
der verschiedenen Härten verschieden harte Füllstoffe verwendet
werden, dann unterscheiden sich die Wärmeausdehnungskoeffizienten der beiden Teile so wenig, daß der Einsatz genau in den
Formteil eingepaßt und eingeklebt werden kann, ohne daß hierbei
besondere elastisch nachgiebige Werkstoffe verwendet werden
müssen.

Im folgenden werden Verfahren beschrieben, bei denen der
Formteil für die Spüle einschließlich des Einsatzes gegossen
werden kann, so daß dann der Einsatz bis auf seine Arbeitsfläche fugenlos in den Formteil eingebettet ist.

Ein Verfahren dieser Art ist in den Fig.8 und 9 erläutert.
Die Fig.8 zeigt den oberen Teil des Domes einer Pratizenhälfte,
die sowohl zum Gießen eines Einsatzes 219 als auch zum Gießen
des diesen Einsatz aufnehmenden Formteiles 213 verwendbar
ist. Zum Gießen des Einsatzes 219 wird eine Matrizenhälfte
265 verwendet, die zur Begrenzung des Einsatzes 219 an seinen
Stirnflächen einen in eine umlaufende Nut 267 eingelegten
Dichtungsring aufweist. Die Matrizenhälfte 265 ist mit einer
Füllöffnung 271 zum Einfüllen der nach dem Erhärten den Werkstoff für den Einsatz 219 bildenden Flüssigkeit und eine
Ablauföffnung 273 für die Luft versehen. Beim Aufsetzen der
Matrizenhälfte 265 auf den Dom der Patrizenhälfte 263 legt
sich der Dichtungsring 269 an die Oberfläche des Domes der
Patrizenhälfte 263 an, so daß durch die beiden Hälften ein
Hohlraum für den Einsatz 219 eingeschlossen wird, an dessen
höchster Stelle die Ablauföffnung 273 angeordnet ist. Beide
Öffnungen 271 und 273 sind leicht kegelstumpfförmig mit nach
unten zeigender größerer Öffnung ausgebildet, um ein Abheben
der Matrizenhälfte 265 nach dem Erhärten des Einsatzes 219
zu ermöglichen, wenn sich in den Öffnungen 271 und 273 "Stümpfe"
des Einsatzes 219 gebildet haben.

Die Nut 267 ist dabei so flach gewählt und mit abgerundeten
unteren Seitenflächen versehen, daß die Matrize dank des
weich elastischen Materials des Dichtungsringes 269 nach
Erhärten des Einsatzes 219 leicht von dem Dom der Patrizenhälfte 263 abgehoben werden kann. Hierbei ist es zweckmäßig,
den Werkstoff des Einsatzes 219 nur so weit erhärten zu lassen,
daß er sich nach dem Abziehen der Patrizenhälfte.265 und

- 14 -

nach dem Abnehmen des Dichtungsringes 269 nicht mehr verformen
kann.
Anschließend wird dann mit der den Einsatz 219 enthaltenden
Patrizenhälfte 263 eine Matrizenhälfte 275 benutzt, die zusammen mit der Patrizenhälfte 263 eine Form für den ganzen Formteil der Spüle bildet. Dann wird die so gebildete Form in
bekannter Weise in einer stark geneigten Stellung gehalten,
bei der sich die Patrizenhälfte 263 unterhalb der Matrizenhälfte 275 befindet. Dann wird vom tiefsten Punkt des von
den beiden Formhälften gebildeten Hohlraumes der flüssige
Werkstoff für den Formteil eingepumpt und die Luft am höchsten
Punkt dieses Hohlraumes abgeführt. Auf diese Weise erhält
man dann einen Formteil, in dem der Einsatz 219 allseitig
bis auf seine an der Oberfläche der Patrizenhälfte anliegende
Arbeitsfläche in den Werkstoff des Formteiles eingebettet
ist.

Ein anderes Verfahren zum Erzielen des im wesentlichen gleichen
Produktes ist in den Fig.10 und 11 erläutert.
Auch bei diesem Verfahren wird zum Herstellen des Einsatzes
219 eine Matrizenhälfte 277 benutzt, die aber im Unterschied
zu dem vorher beschriebenen Ausführungsbeispiel aus einer
Schale besteht, in die zunächst der flüssige Werkstoff für
den Einsatz 219 in einer vorher genau abgemessenen Menge
eingegossen wird. Anschließend wird dann, wie das in Fig.11
dargestellt ist, von oben der Dom der Patrizenhälfte 263
in den flüssigen Werkstoff für den Einsatz 219 eingetaucht.
Um hierbei eine genaue Positionierung der Patrizenhälfte 263
gegenüber der Matrizenhälfte 277 zu erreichen, sind mit der
Patrizenhälfte 263 Anschläge 279 lösbar verbunden, die mit
Anschlägen 281 an der Matrizenhälfte 277 zusammenwirken.
Sobald der Werkstoff für den Einsatz 219 so weit erhärtet
ist, daß er nicht mehr fließen kann, wird die ganze Form
so umgedreht, daß die Matrizenhälfte 277 sich über der Patrizenhälfte 263 befindet.

Dann wird, wie im vorher beschriebenen Ausführungsbeispiel, die Matrizenhälfte 277 von der Patrizenhälfte 263 abgehoben. Nachdem dann die Anschläge 279 von der Patrizenhälfte 263 entfernt sind, wird auf die Patrizenhälfte die Matrizenhälfte 275 für den Formteil 213 aufgesetzt und das Formteil als Ganzes wie beschrieben gegossen.

Die beiden oben beschriebenen Ausführungsformen des Verfahrens sind bevorzugte Ausführungsformen. Der Einsatz 219 kann jedoch auch in einer speziell für ihn vorgesehenen Form gegossen werden und dann anschließend auf den Dom der Patrizenhälfte 263, wie in Fig.9 dargestellt, aufgelegt werden. Anschließend wird wiederum, wie oben beschrieben, der gesamte Formteil der Spüle in die sich aus der Patrizenhälfte 263 und der Matrizenhälfte 275 gebildeten Form eingepumpt.

Ein nach diesen Verfahren hergestelltes Becken einer Spüle ist in Fig.12 dargestellt, wo jedoch nur der hier interessierende untere Teil des Beckens 215 des Formteil 213 mit dem die Arbeitsfläche bildenden Einsatz 219 dargstellt ist. Nach dem Ausformen des Formteils 213 wird dann noch in die vom Einsatz 219 und dem Formteil 213 gebildete Vertiefung eine Bohrung für den Abfluß 229 hergestellt.

Wie ohne weiteres ersichtlich ist, kann auf Grund der oben gegebenen Beschreibung der für die Herstellung des Formteiles 213 mit dem Einsatz 219 benutzen Verfahren auch jede beliebige andere Arbeitsfläche eines Formteiles für eine Spüle ausgebildet werden.

Als Werkstoff für das Durchführen der oben genannten Verfahren kann ein bekannter, polymerisierbarer, flüssiger Stoff verwendet werden, der mit einem pulverisierten Füllstoff gemischt ist, und zwar unterscheiden sich die für den Formteil einerseits und für den Einsatz andererseits verwendeten Mischungen

- 16 -

nur dadurch, daß für den Einsatz ein pulverisierter Füllstoff aus einem weicheren Werkstoff und für den Formteil aus einem härteren Material verwendet werden.

Beispielsweise kann hierbei zur Bildung des Formteiles 213 die im Handel unter der Bezeichnung "Asterite" bekannte Acrylflüssigkeit mit Quarzmehl als Füllstoff benutzt werden. Die Herstellung und Behandlung dieser Acrylflüssigkeit ist ausführlich in der DE-PS 24 49 656 beschrieben.

Zur Bildung des Einsatzes 219 kann eine Acrylflüssigkeit verwendet werden, die in der gleichen Weise hergestellt wird, wie das in der DE-PS 24 49 256 beschrieben ist, nur daß hier als Füllstoff anstelle von Quarzmehl pulverisiertes Aluminium- oder Magnesiumhydroxid benutzt wird.

Dem flüssigen Harz für den Einsatz können farbige Partikel zugemischt werden, die der Oberfläche des Einsatzes eine gewünschte Struktur, z.B. eine Granitstruktur, geben.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

- 1 -                              0229262


            P a t e n t a n s p r ü c h e


1. Spüle, insbesondere Küchenspüle, mit einem Formteil
   (13), das mindestens eine bei der Benutzung der Spüle
   beanspruchte Arbeitsfläche aufweist, dadurch gekennzeichnet, daß die Arbeitsfläche die Oberfläche eines mit
   dem Formteil verbundenen Einsatzes (19,53,119,219) bildet,
   der aus einem Werkstoff besteht, dessen Härte von der
   Härte des Werkstoffes, aus dem das Formteil (13) besteht,
   verschieden ist.


2. Spüle nach Anspruch 1, dadurch gekennzeichnet, daß bei
   einem Formteil (13,213) mit eingeformtem Becken (15,
   45,215) der Beckenboden als Arbeitsfläche durch die
   Oberfläche des Einsatzes (19,119,219) gebildet ist.


3. Spüle nach Anspruch 2, dadurch gekennzeichnet, daß das
   Formteilbecken (45) anstelle eines Bodens eine vom unteren
   Rand (47) der Beckenseitenwände umrandete Öffnung (49)
   aufweist und daß der Einsatz (19) am unteren Rand (47)
   der Beckenseitenwände anliegend befestigt ist.


4. Spüle nach Anspruch 2, dadurch gekennzeichnet, daß das
   Formteilbecken (15,115,215) einen Boden aufweist, mit
   dem der Einsatz (19,119,219) verbunden ist, und daß
   die Oberfläche des als ebene Platte ausgebildeten Einsatzes (19,119) in der Gebrauchslage der Spüle gegenüber
   der Horizontalebene (158) zu einem Abfluß (29,129) hin
   nach unten geneigt ist.

5. Spüle nach Anspruch 4, dadurch gekennzeichnet, daß
   der Boden des Beckens eine Rippe (159) aufweist,
   die die unteren Ränder (132) von zwei aneinanderstoßenden Seitenwandungen (133) des Beckens miteinander
   verbindet und einerseits zusammen mit den Seitenwandrändern (132) eine Mulde (161) zur Aufnahme des Abflusses (129) begrenzt und andererseits eine Anlagefläche
   für eine Stirnwand (139) des Einsatzes (119) bildet,
   die der Aussparung (127) für den Abfluß (129) zugekehrt
   und von einer geraden Kante (128) begrenzt ist.

6. Spüle nach einem der Ansprüche 1 bis 5, dadurch gekennzeichnet, daß der Einsatz (19) im Formteil (13) in
   einem elastisch nachgiebigen Werkstoff (23,123,25,125)
   eingebettet ist.

7. Spüle nach einem der Ansprüche 1 bis 5, dadurch gekennzeichnet, daß der Einsatz (215) fugenlos in den Formteil (213) eingebettet ist.

8. Spüle nach einem der Ansprüche 1 bis 7, dadurch gekennzeichnet, daß der Werkstoff des Einsatzes (19,53,119)
   härter ist als der des Formteiles (13).

9. Spüle nach Anspruch 8, dadurch gekennzeichnet, daß
   die untere Fläche des Einsatzes (19,53,119) mit einem
   mit Glasfasern armierten Werkstoff (23) beschichtet
   ist.

10. Spüle nach einem der Ansprüche 1 bis 7, dadurch gekennzeichnet, daß der Werkstoff des Einsatzes (219) weicher
    ist als der des Formteiles (213).

11. Spüle nach Anspruch 10, dadurch gekennzeichnet, daß das Formteil (213) aus einem Harz mit hartem Füllstoff und der Einsatz aus dem gleichen Harz mit relativ weicherem Füllstoff besteht.

12. Spüle nach Anspruch 11, dadurch gekennzeichnet, daß als Harz Acrylharz, als harter Füllstoff Quarzmehl und als relativ weicherer Füllstoff Aluminium- oder Magnesiumhydroxid vorgesehen sind.

13. Spüle nach Anspruch 11 oder 12, dadurch gekennzeichnet, daß dem Harz für den Einsatz farbige Partikel zugemischt sind, die der Oberfläche des Einsatzes eine gewünschte Struktur geben.

14. Verfahren zum Herstellen des Formteiles (13,213) für eine Spüle nach einem der Ansprüche 1 bis 13, dadurch gekennzeichnet, daß der Einsatz (219) in eine Gießform für den Formteil (213) so eingelegt wird, daß seine die Arbeitsfläche bildende Oberfläche an einem formbildenden Teil der Oberfläche der Patrizenhälfte (263) der Gießform anliegt, und daß dann der flüssige Werkstoff für den Formteil (213) in die Gießform gegossen wird, so daß nach dem Erhärten der Formteil fugenlos am Einsatz (219) anliegt.

15. Verfahren nach Anspruch 14, dadurch gekennzeichnet, daß für das Herstellen des Formteiles (213) und des mit diesem verbundenen Einsatzes (219) zwei Gießformen mit einer gemeinsamen Patrizenhälfte (263) verwendet werden, daß der Einsatz zuerst mit einer hierfür vorgesehenen Matrizenhälfte (265,277) gegossen wird und, nachdem er mindestens zum Teil gehärtet ist, die Matrizenhälfte (265,277) seiner Gießform gegen eine Matrizenhälfte (275) der Gießform für das Formteil (213) ausgetauscht wird, ohne den Einsatz (219) von der gemeinsamen Patrizenhälfte (263) zu entfernen, und daß dann der flüssige Werkstoff für den Formteil (213) in diese Gießform (263,275) gegossen wird, so daß der Einsatz (219) bis auf die von ihm gebildete Arbeitsfläche in den Werkstoff des Formteiles (213) fugenlos eingebettet wird.

16. Verfahren nach Anspruch 15, dadurch gekennzeichnet, daß für die Gießform des Einsatzes (219) eine Matrizenhälfte (265) verwendet wird, die eine umlaufende Nut (267) für einen Dichtring (269) aufweist, der mit der Oberfläche der Patrizenhälfte (263) den Hohlraum der Gießform begrenzt, daß die Matrizenhälfte (265) auf die Patrizenhälfte (263) aufgesetzt und der so gebildete Hohlraum mit dem flüssigen Werkstoff für den Einsatz gefüllt wird.

17. Verfahren nach Anspruch 15, dadurch gekennzeichnet, daß als Matrizenhälfte (277) der Gießform für den Einsatz (219) eine Schale verwendet wird, in die der flüssige Werkstoff des Einsatzes (219) eingegossen wird, daß dann die Patrizenhälfte (263) in den flüssigen Werkstoff zur Bildung der Form für den Einsatz (219) eingetaucht wird.

- . -

Fig.1

0229262

1/5

Reg.-Nr. 126 945c

0229262

Fig.2

Fig.3

Fig.4

Fig.5

Reg.-Nr. 126 945c

0229262

## Fig.7

## Fig.6

Reg.-Nr. 126 945c

0229262

Fig.8

271    219    265    273

267

269    263

Fig.9

275

219

263

Reg.-Nr.126 945c

# Fig.11

279    263    279

281

281    277    219

# Fig.10

281    281

277

# Fig.12

219    215    213

229

Reg.-Nr. 126 945c